# EUROPÄISCHE PATENTSCHRIFT

(11) **EP 3 339 715 B1**
(45) Veröffentlichungstag und Bekanntmachung des Hinweises auf die Patenterteilung: **30.01.2019**
(21) Anmeldenummer: 17206011.3
(22) Anmeldetag: 07.12.2017
(51) Int. Cl.: F16P 3/14

(54) **ZUGANGSABSICHERUNGSSYSTEM**
ACCESS PROTECTION SYSTEM
SYSTÈME DE PROTECTION D'ACCÈS

(30) Priorität: 23.12.2016 DE 102016125595
(43) Veröffentlichungstag der Anmeldung: 27.06.2018
(73) Patentinhaber: SICK AG, 79183 Waldkirch/Breisgau (DE)
(72) Erfinder: DIETRICH, Urs, 79341 Kenzingen (DE)
(74) Vertreter: Manitz Finsterwald Patentanwälte PartmbB

(56) Entgegenhaltungen:
- EP-A1- 2 315 052
- DE-U1-202009 006 683
- US-A1- 2011 090 040
- ALLEN BRADLEY: "User Manual Safezone Multizone Safety Laser Scanner", INTERNET CITATION, Mai 2005 (2005-05), Seiten 1-79, XP002591411, Gefunden im Internet: URL:http://samplecode.rockwellautomation.c om/idc/groups/literature/documents/um/442l -um002_-en-p.pdf [gefunden am 2010-07-09]

## Beschreibung

Die vorliegende Erfindung betrifft ein Zugangsabsicherungssystem mit einem ersten Sicherheitssensor, einem zweiten Sicherheitssensor und einer elektronischen Steuereinrichtung, die mit dem ersten und dem zweiten Sicherheitssensor in Signalverbindung steht.

Zugangsabsicherungssysteme sind insbesondere bei automatisierten Herstellungs- und Verpackungsprozessen von großer Bedeutung. Die bei solchen automatisierten Prozessen eingesetzten Roboter und Maschinen stellen ein erhebliches Gefährdungspotential für Personen dar. Daher muss sichergestellt sein, dass während des Betriebs der Roboter und Maschinen keine Personen in den Gefahrenbereich eindringen. Falls dennoch eine Person in den Gefahrenbereich eindringt, müssen entsprechende Schutzmaßnahmen ergriffen werden. Ein Eindringen einer Person in den Gefahrenbereich kann beispielsweise mittels Lichtgittern erkannt werden.

Problematisch ist hierbei jedoch, dass es bei vielen Anwendungen notwendig oder erwünscht ist, dass bestimmte Objekte wie z. B. Fahrzeuge, Bauteile oder Baugruppen während des Betriebs der Anlage in den Arbeitsbereich der Roboter hineinbewegt werden. Diese Objekte sollen keinen Alarm und insbesondere keine Notabschaltung der Roboter auslösen, da dies dem Durchsatz der Gesamtanlage abträglich wäre. Es können daher zusätzliche Sensoranordnungen wie zum Beispiel bodenseitige Induktionsschleifen oder Reflexionslichtschranken mit Codierungserkennung vorgesehen sein, um das Herannahen zulässiger Objekte zu erkennen und für ein Unterlassen der Sicherheitsmaßnahmen zu sorgen. Dies ist jedoch mit einem hohen Herstellungs-, Montage- und Steuerungsaufwand verbunden. Außerdem besteht eine hohe Fehleranfälligkeit, die gerade in Sicherheitsfragen nicht akzeptabel ist.

Die DE 10 2006 012 823 A1 offenbart eine Vorrichtung zur Überwachung eines Gefahrenbereichs, welche zwei voneinander beabstandete optische Sensoren aufweist. Jeder der Sensoren umfasst eine Kamera, ein Beleuchtungssystem sowie eine elektronische Auswerteeinheit. Bei einem Eindringen einer Person in den Gefahrenbereich werden die gefahrenträchtigen Roboter und Maschinen abgeschaltet. Nicht sicherheitskritische Objekte werden erkannt und nicht als Anlass für eine Abschaltung eingestuft.

In der DE 20 2009 006683 U1 ist ein Zugangsabsicherungssystem mit mehreren Warnfeldern offenbart. Wenn zwei Warnfelder gleichzeitig unterbrochen werden, wird ein Muting durchgeführt.

In Allen Bradley: "User Manual SafeZone Multizone Safety Laser Scanner", Internet Citation, Mai 2005, XP002591411, http://samplecode.rockwellautomation.com/ idc/groups/literature/documents/um/442I-um002_-en-p.pdf, ist ein Zugangsabsicherungssystem mit mehreren Laserscannern offenbart.

Es ist eine Aufgabe der Erfindung, ein Zugangsabsicherungssystem anzugeben, das einfach aufgebaut ist, das Eindringen zulässiger Objekte in den Gefahrenbereich ermöglicht und dabei dennoch einen zuverlässigen Personenschutz gewährleistet.

Die Lösung der Aufgabe erfolgt durch ein Zugangsabsicherungssystem mit den Merkmalen des Anspruchs 1.

Die Erfindung sieht vor, dass der erste und der zweite Sicherheitssensor im Betrieb jeweils ein Sicherheits-Schutzfeld und jeweils wenigstens ein erstes Detektions-Schutzfeld ausbilden, wobei der erste und der zweite Sicherheitssensor derart angeordnet sind, dass die ersten Detektions-Schutzfelder wenigstens bereichsweise nicht überlappen.

Der erste und der zweite Sicherheitssensor sind Laserscanner. Laserscanner mit konfigurierbaren Schutzfeldern sind für die Zugangsabsicherung in besonderer Weise geeignet.

Erfindungsgemäß ist die elektronische Steuereinrichtung dazu ausgebildet,
(i) beim Eindringen eines Objekts in das Sicherheits-Schutzfeld des ersten und/oder des zweiten Sicherheitssensors eine Sicherheitsfunktion auszulösen und
(ii) den Betriebszustand des Zugangsabsicherungssystems zu ändern, wenn ein Eindringen des Objekts sowohl in das erste Detektions-Schutzfeld des ersten Sicherheitssensors als auch in das erste Detektions-Schutzfeld des zweiten Sicherheitssensors festgestellt wird.

Wenn also eine Person in den Gefahrenbereich gelangt, wird die Sicherheitsfunktion automatisch ausgelöst. Bei der Sicherheitsfunktion kann es sich zum Beispiel um ein optisches und/oder akustisches Warnsignal, eine Verringerung der Arbeitsgeschwindigkeit vorhandener Roboter oder sogar um eine Notabschaltung der gesamten zugehörigen Anlage handeln. Bei Bedarf können auch mehrere Sicherheitsfunktionen in Kombination ausgelöst werden, wenn ein Objekt in das Sicherheits-Schutzfeld des ersten und/oder des zweiten Sicherheitssensors eindringt.

Die beiden Detektions-Schutzfelder können derart angeordnet und ausgerichtet sein, dass sie bei einem Annähern oder Eindringen eines bekannten zulässigen Objekts in den Gefahrenbereich verletzt werden. Der Betriebszustand des Zugangsabsicherungssystems kann dann in anwendungsspezifischer Weise geändert werden, um eine Betriebsbehinderung durch das zulässige Objekt zu vermeiden. Von besonderem Vorteil ist hierbei, dass die Änderung des Betriebszustands nicht zwingend mit einer Unterdrückung der Sicherheitsfunktion einhergehen muss, sondern lediglich eine Einschränkung der Sicherheitsfunktion - wie z. B. eine Geschwindigkeitsverringerung anstatt einer Notabschaltung - oder sogar nur eine Anpassung des abgesicherten Bereichs unter ansonsten vollständiger Erhaltung der Sicherheitsfunktion nach sich ziehen kann. Durch die beiden voneinander unabhängigen Detektions-Schutzfelder stehen zwei separate Eingangsinformationen zur Verfügung, um zulässige Objekte sicher zu erkennen und zum Beispiel von Personen zu unterscheiden. Bei Bedarf kann ein erfindungsgemäßes Zugangsabsicherungssystem mehr als zwei Sicherheitssensoren und/oder mehr als ein Sicherheits-Schutzfeld pro Sicherheitsensor umfassen, deren Signale in der beschriebenen Weise verwertet werden.

Vorzugsweise ist die elektronische Steuereinrichtung dazu ausgebildet, die Sicherheits-Schutzfelder und die Detektions-Schutzfelder des ersten und des zweiten Sicherheitssensors einer gemeinsamen Auswertung zu unterziehen. Die Auswertung der Sicherheits-Schutzfelder und der Detektions-Schutzfelder wird also vorzugsweise von ein und demselben Gerät durchgeführt. Dadurch ist eine besonders zuverlässige Beurteilung des aktuellen Anlagenzustands möglich. Die Bereitstellung so genannter Muting-Sensoren ist nicht erforderlich.

Die elektronische Steuereinrichtung kann dazu ausgebildet sein, das Ändern des Betriebszustands in Schritt (ii) in Abhängigkeit vom aktuellen Betriebszustand durchzuführen. Dadurch kann das System bestimmte betriebliche Abläufe nachvollziehen und flexibel auf Zustandsänderungen reagieren.

Die elektronische Steuereinrichtung kann eine Schaltlogik umfassen, die dazu ausgebildet ist, anhand einer logischen Verknüpfung von Ausgabesignalen aller Sicherheits-Schutzfelder und aller Detektions-Schutzfelder festzustellen, ob es sich bei einem in den abzusichernden Bereich eindringenden Objekt um ein zulässiges Objekt handelt. Dies ermöglicht auf einfache und dennoch zuverlässige Weise, falsche Alarme einerseits und Sicherheitslücken andererseits zu vermeiden. Insbesondere können ungültige Kombinationen von Schutzfeldverletzungen ein Auslösen der Sicherheitsfunktion bewirken.

Gemäß der Erfindung umfasst das Ändern des Betriebszustands des Zugangsabsicherungssystems eine Anpassung des Sicherheits-Schutzfelds des ersten und/oder des zweiten Sicherheitssensors. Die Anpassung kann insbesondere eine Verkleinerung und/oder eine Formänderung umfassen. Beispielsweise kann das Sicherheits-Schutzfeld aus denjenigen Bereichen zurückgenommen werden, durch die sich das zulässige Objekt hindurchbewegen soll. Die Sicherheitsfunktion kann dann im Prinzip vollständig erhalten bleiben, sodass der Personenschutz auch während der Bewegung des zulässigen Objekts grundsätzlich gewährleistet ist. Bei Bedarf kann die Sicherheitsfunktion jedoch unterdrückt oder modifiziert werden. Alternativ oder zusätzlich zu einer Anpassung des Sicherheits-Schutzfelds ist eine Anpassung eines oder mehrerer der Detektions-Schutzfelder möglich.

Gemäß einer speziellen Ausgestaltung ist die elektronische Steuereinrichtung dazu ausgebildet, in dem geänderten Betriebszustand das Sicherheits-Schutzfeld des ersten und/oder des zweiten Sicherheitssensors an die Kontur eines vorgegebenen zulässigen Objekts anzupassen. Dies gewährleistet ein hohes Maß an Sicherheit, da die Absicherung nicht mehr als unbedingt notwendig eingeschränkt wird.

Die elektronische Steuereinrichtung kann dazu ausgebildet sein, in dem geänderten Betriebszustand durch fortlaufende Anpassung des Sicherheits-Schutzfelds des ersten und/oder des zweiten Sicherheitssensors eine Aussparung des durch die Sicherheits-Schutzfelder gebildeten Gesamt-Schutzfelds einem durch dieses hindurchbewegten Objekt nachzuführen. Somit kann vor und hinter dem Objekt die Absicherung beibehalten werden. Es wird also vorzugsweise lediglich derjenige Bereich von der Sensorüberwachung ausgeschlossen, in welchem sich das zulässige Objekt befindet und in welchen folglich ohnehin keine Person eindringen kann.

Gemäß einer weiteren Ausführungsform der Erfindung ist die elektronische Steuereinrichtung dazu ausgebildet, den Betriebszustand des Zugangsabsicherungssystems lediglich dann zu ändern, wenn das Eindringen des Objekts in das erste Detektions-Schutzfeld des ersten Sicherheitssensors und in das erste Detektions-Schutzfeld des zweiten Sicherheitssensors zusätzlich zu dem Eindringen des Objekts in das Sicherheits-Schutzfeld des ersten und/oder des zweiten Sicherheitssensors, das heißt insbesondere vor oder gleichzeitig mit dem Eindringen des Objekts in das Sicherheits-Schutzfeld des ersten und/oder des zweiten Sicherheitssensors festgestellt wird.

Es kann vorgesehen sein, dass die elektronische Steuereinrichtung dazu ausgebildet ist, in dem geänderten Betriebszustand die Sicherheitsfunktion zu unterdrücken, insbesondere für eine vorgegebene Zeitdauer. Dadurch kann bei Bedarf die für eine Schutzfeldumschaltung erforderliche Zeit überbrückt werden.

Vorzugsweise sind der erste und der zweite Sicherheitssensor an gegenüberliegenden Seiten eines Überwachungsbereichs angeordnet. Bei dem Überwachungsbereich kann es sich insbesondere um den Arbeitsbereich eines Roboters oder einer Maschine handeln.

Der erste und der zweite Sicherheitssensor können Blickrichtungen definieren, die zumindest im Wesentlichen aufeinander zu weisen. Wenn sich ein zulässiges Objekt zwischen den beiden Sicherheitssensoren befindet, kann der nicht durch das Objekt belegte Raum aufgrund der gegensätzlich ausgerichteten Sensoren vollständig überwacht werden.

Die Scan-Ebenen der Laserscanner können zumindest im Wesentlichen koplanar, parallel zueinander oder leicht schräg zueinander verlaufen, sodass sie eine gemeinsame Absicherungsfläche aufspannen.

Es ist bevorzugt, dass die Sicherheits-Schutzfelder des ersten und des zweiten Sicherheitssensors aneinander angrenzen oder überlappen. Somit wird ein lückenloses Gesamt-Schutzfeld definiert.

Es kann vorgesehen sein, dass sich das erste Detektions-Schutzfeld des ersten Sicherheitssensors und/oder das erste Detektions-Schutzfeld des zweiten Sicherheitssensors jeweils in wenigstens einer Richtung über die Sicherheits-Schutzfelder des ersten und des zweiten Sicherheitssensors hinaus erstreckt. Durch derartige Detektions-Schutzfelder kann ein Objekt bereits detektiert werden, bevor es in die Sicherheits-Schutzfelder, also in den unmittelbaren Gefahrenbereich, eindringt.

Die ersten Detektions-Schutzfelder können so ausgestaltet sein, dass sie nur auf ein Eindringen von Objekten mit bestimmten Merkmalen wie beispielsweise Codierungen ansprechen. Es ist dann ausgeschlossen, dass eine Person die Änderung des Betriebszustands herbeiführt.

Gemäß einer weiteren Ausführungsform der Erfindung bilden der erste und der zweite Sicherheitssensor im Betrieb jeweils wenigstens ein zweites Detektions-Schutzfeld aus, das sich in eine andere Richtung erstreckt als das erste Detektions-Schutzfeld. Eine besonders bevorzugte Ausgestaltung sieht für jeden Sicherheitssensor drei sich in unterschiedliche Richtungen erstreckende Detektions-Schutzfelder vor. Dies ermöglicht eine weitergehende Unterscheidung zwischen verschiedenen Objekten und Systemzuständen und erhöht so die Flexibilität des Zugangsabsicherungssystems.

Weiterbildungen der Erfindung sind auch in den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine vereinfachte Vorderansicht eines Zugangsabsicherungssystems gemäß einer ersten Ausführungsform der Erfindung.
- Fig. 2: ist eine Draufsicht auf das Zugangsabsicherungssystem gemäß Fig. 1.
- Fig. 3: zeigt eine Variante des Zugangsabsicherungssystems gemäß Fig. 1 in einem ersten Betriebszustand.
- Fig. 4: zeigt das Zugangsabsicherungssystem gemäß Fig. 3 in einem zweiten Betriebszustand.
- Fig. 5: zeigt das Zugangsabsicherungssystem gemäß Fig. 3 in einem dritten Betriebszustand.
- Fig. 6: zeigt verschiedene Betriebszustände einer weiteren Variante des in Fig. 1 dargestellten Zugangsabsicherungssystems.
- Fig. 7-11: sind vereinfachte Draufsichten auf ein Zugangsabsicherungssystem gemäß einer zweiten Ausführungsform der Erfindung während verschiedener Phasen der Bewegung eines zulässigen Objekts durch den abgesicherten Bereich.

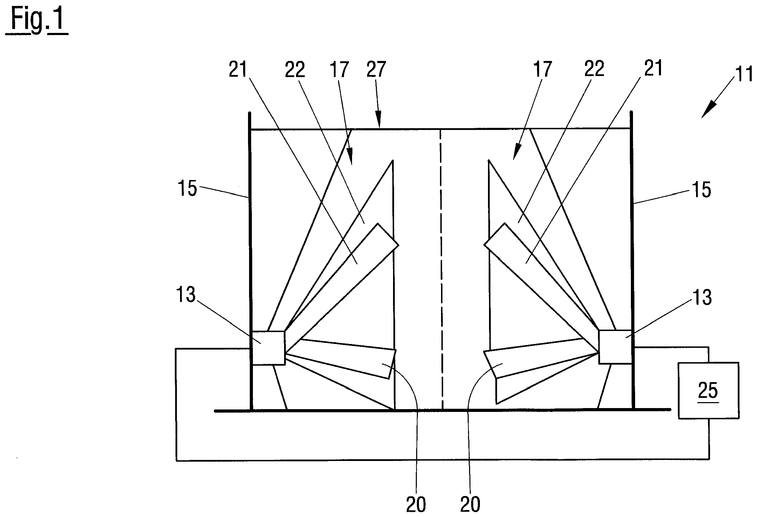

Das in Fig. 1 gezeigte Zugangsabsicherungssystem 11 dient beispielsweise der Absicherung eines Durchgangs in einer Produktionsstraße und umfasst zwei als Laserscanner ausgeführte Sicherheitssensoren 13, die gegenüberliegend an jeweiligen Begrenzungselementen oder Wandelementen 15 montiert sind. Die Blickrichtungen der Sicherheitssensoren 13 weisen aufeinander zu. Jeder der Sicherheitssensoren 13 bildet im Betrieb ein Sicherheits-Schutzfeld 17 aus, wie dies grundsätzlich bekannt ist. Durch die Sicherheits-Schutzfelder 17 beider Sicherheitssensoren 13 ist ein Gesamt-Schutzfeld 27 definiert, das den Bereich zwischen den beiden Wandelementen 15 weitgehend ausfüllt.

Jeder der beiden Sicherheitssensoren 13 bildet im Betrieb zusätzlich zu dem Sicherheits-Schutzfeld 17 drei Detektions-Schutzfelder 20, 21, 22 aus, die für eine Objektunterscheidung vorgesehen sind. Die Sicherheits-Schutzfelder 17 und die Detektions-Schutzfelder 20, 21, 22 können flächig oder räumlich ausgebildet sein. Die dargestellte Geometrie der Detektions-Schutzfelder 20, 21, 22 mit zwei sich in unterschiedlichen Richtungen erstreckenden Detektions-Schutzfeldern 20, 21 und einem vergrößerten Detektions-Schutzfeld 22 ist rein beispielhaft und kann in Abhängigkeit von der Anwendung in vielfältiger Weise angepasst werden. Insbesondere können die Sicherheitssensoren 13 jeweils mehr als ein Sicherheits-Schutzfeld 17 und jeweils mehr als drei Detektions-Schutzfelder 20, 21, 22 aufweisen.

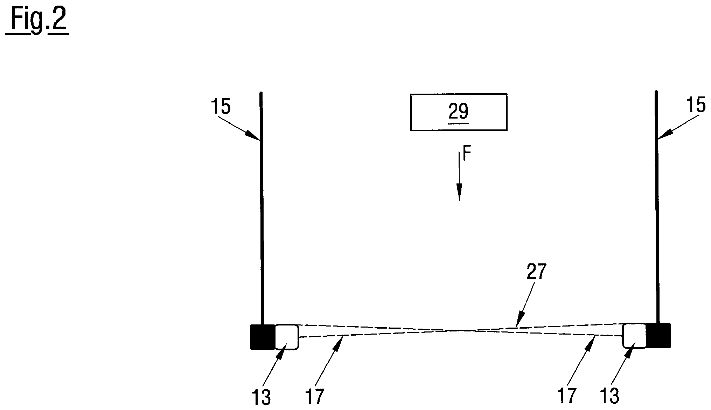

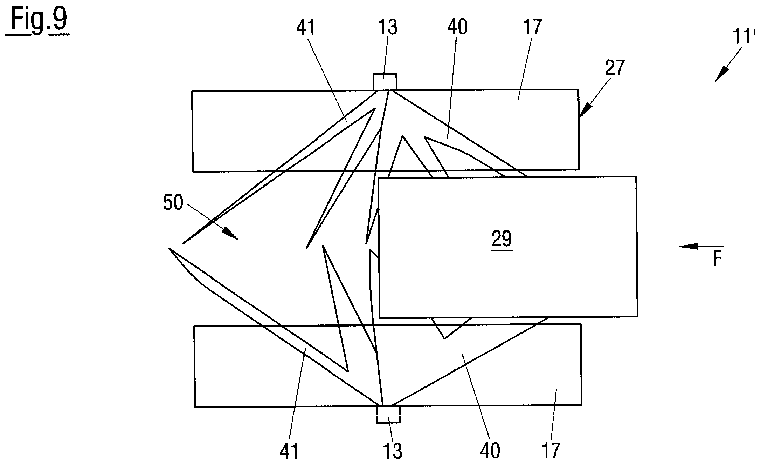

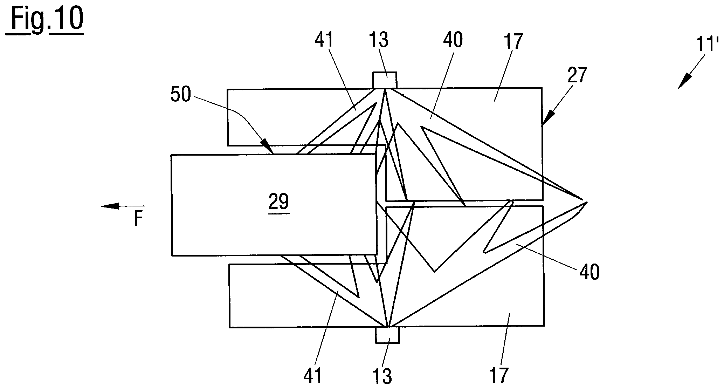

Das Zugangsabsicherungssystem 11 umfasst eine elektronische Steuereinrichtung 25 in Form eines Controllers, der über geeignete Schnittstellen und Verbindungsleitungen mit den Sicherheitssensoren 13 in Signalverbindung steht. Die elektronische Steuereinrichtung 25 weist eine Schaltlogik zum logischen Verknüpfen von Ausgabesignalen der Sicherheits-Schutzfelder 17 und der Detektions-Schutzfelder 20, 21, 22 auf. Auf diese Weise ist es möglich, alle vorhandenen Schutzfelder 17, 20, 21, 22 des Zugangsabsicherungssystems 11 gemeinsam auszuwerten. In den Fig. 2-11 ist zur Vereinfachung die elektronische Steuereinrichtung 25 nicht dargestellt.

In Fig. 2 ist zu erkennen, dass die Sicherheits-Schutzfelder 17 der Sicherheitssensoren 13 annähernd koplanar zueinander verlaufen und das im Wesentlichen vertikale Gesamt-Schutzfeld 27 aufspannen. Durch dieses treten während des Betriebs der zugehörigen Produktionslinie entlang einer Förderrichtung F transportierte Objekte 29 hindurch.

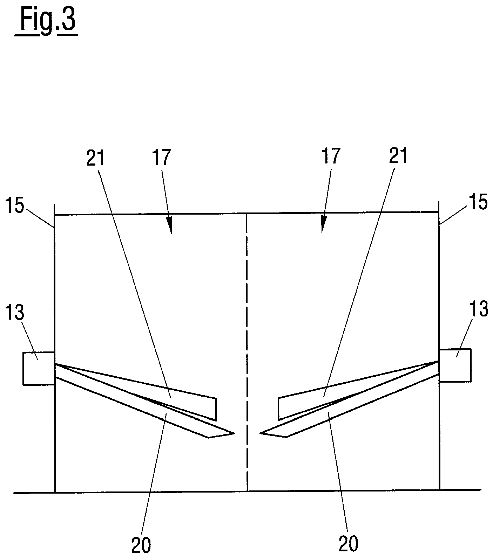

Beim Eindringen eines Objekts 29 in das Gesamt-Schutzfeld 27 sorgt die elektronische Steuereinrichtung 25 dafür, dass eine Sicherheitsfunktion ausgelöst wird, also zum Beispiel ein Warnsignal ausgegeben wird und/oder eine Abschaltung der Anlage erfolgt. Falls jedoch ein Eindringen des Objekts 29 in zwei einander gegenüberliegende Detektions-Schutzfelder 20, 21, 22 festgestellt wird, veranlasst die elektronische Steuereinrichtung 25 eine Änderung des Betriebszustands des Zugangsabsicherungssystems 11, wie nachfolgend unter Bezugnahme auf die Fig. 3-5 näher ausgeführt wird.

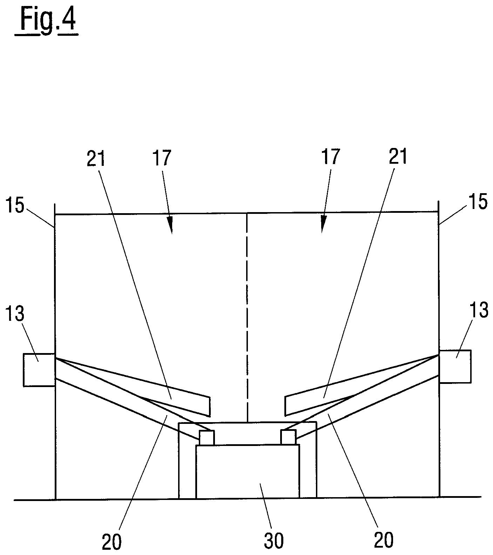

Bei der in Fig. 3-5 gezeigten Variante bildet jeder Sicherheitssensor 13 lediglich zwei Detektions-Schutzfelder 20, 21 aus. Sofern diese wie in Fig. 3 gezeigt nicht verletzt sind, füllen die Sicherheits-Schutzfelder 17 im Wesentlichen den gesamten Raum zwischen den beiden Wandelementen 15 aus. Wenn sich hingegen wie in Fig. 4 gezeigt ein zulässiges Objekt, hier zum Beispiel ein führerloses Transportfahrzeug 30, den Sicherheitssensoren 13 nähert und dabei die beiden unteren Detektions-Schutzfelder 20 verletzt, sorgt die elektronische Steuereinrichtung 25 für eine Verkleinerung der Sicherheits-Schutzfelder 17, sodass das führerlose Transportfahrzeug 30 den Durchgang passieren kann, ohne dass eine Sicherheitsabschaltung der Anlage erfolgt. Die verkleinerten Sicherheits-Schutzfelder 17 bleiben aber grundsätzlich aktiv, sodass beim Eindringen einer Person in die Sicherheits-Schutzfelder 17 nach wie vor eine Sicherheitsabschaltung erfolgt.

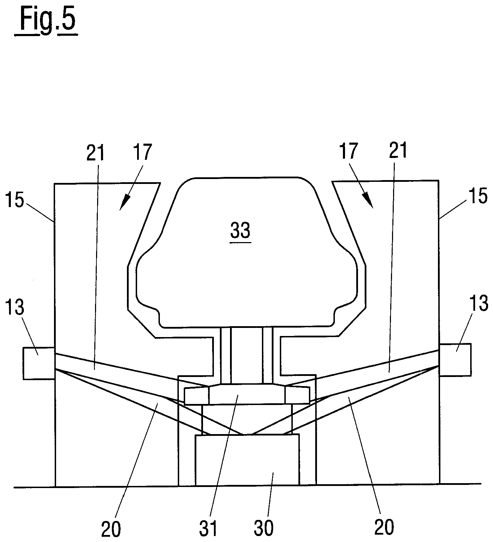

In Fig. 5 ist eine Betriebssituation gezeigt, bei welcher eine Plattform 31 des führerlosen Transportfahrzeugs 30 angehoben und mit einer Karosserie 33 beladen ist. Die elektronische Steuereinrichtung 25 erkennt diesen Zustand an der gleichzeitigen Verletzung der oberen Detektions-Schutzfelder 21 und sorgt dafür, dass die Sicherheits-Schutzfelder 17 wie dargestellt an die Kontur des führerlosen Transportfahrzeugs 30 sowie der Karosserie 33 angepasst werden.

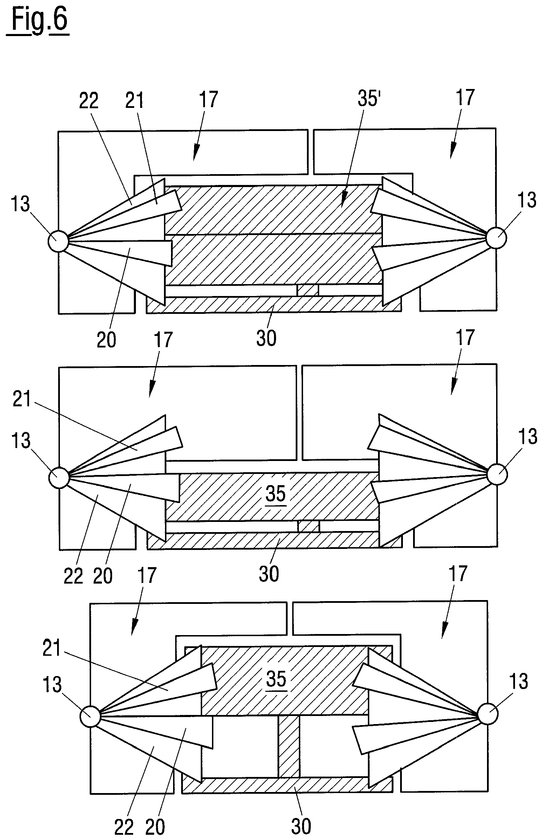

Es versteht sich, dass auf die beschriebene Weise eine Vielzahl von Betriebszuständen voneinander unterschieden werden können. Beispielhaft ist in Fig. 6 die Anpassung der Sicherheits-Schutzfelder 17 für eine angehobene Baugruppe 35 (unteres Bild), eine abgesenkte Baugruppe 35 (mittleres Bild) und eine mehrteilige Baugruppe 35' (oberes Bild) gezeigt.

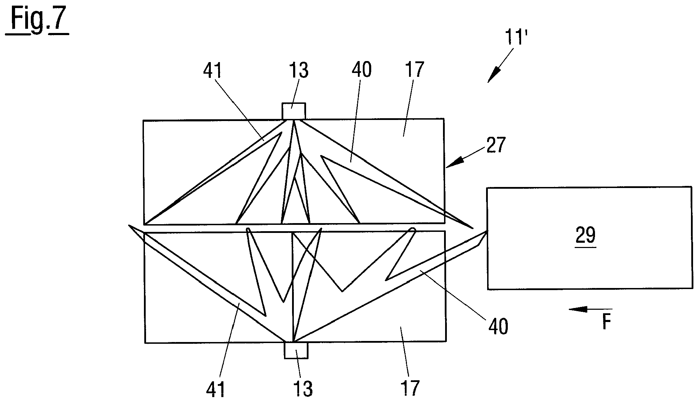

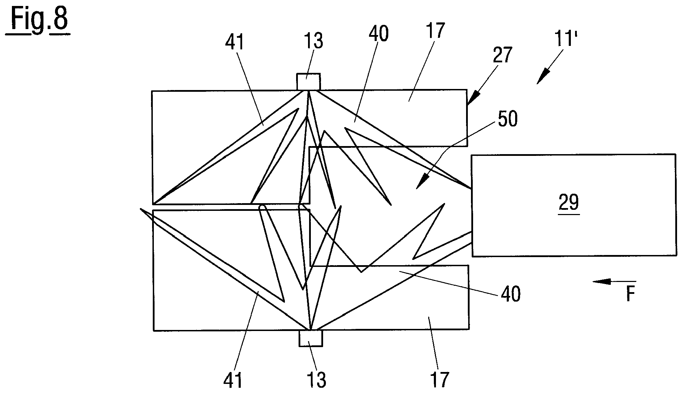

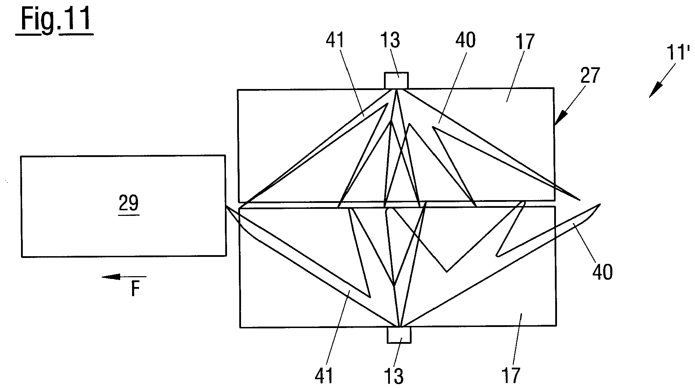

Die in den Fig. 7-11 gezeigte Ausführungsform eines erfindungsgemäßen Zugangsabsicherungssystems 11' unterscheidet sich insofern von den vorstehend beschriebenen Varianten, als die Scanebenen der Sicherheitssensoren 13 horizontal verlaufen. Ein zulässiges Objekt 29, das entlang der Förderrichtung F durch den abgesicherten Bereich bewegt wird, verletzt noch vor dem Eindringen in die Sicherheits-Schutzfelder 17 jeweilige Detektions-Schutzfelder 40, 41, die sich über die Sicherheits-Schutzfelder 17 hinaus erstrecken (Fig. 7). Die Sicherheits-Schutzfelder 17 werden dann angepasst, und zwar derart, dass eine Aussparung 50 des Gesamt-Schutzfelds 27 dem bewegten Objekt 29 nachgeführt wird (Fig. 8-10). Sobald das Objekt 29 den abgesicherten Bereich passiert hat und die Detektions-Schutzfelder 40, 41 nicht mehr verletzt sind, werden die Sicherheits-Schutzfelder 17 wieder auf maximale Größe geschaltet (Fig. 11).

Die Erfindung ermöglicht mit einfachen Mitteln eine sichere und zuverlässige Erkennung zulässiger Objekte 29 bei gleichzeitiger Sicherstellung eines dauerhaften Personenschutzes. Es ist von besonderem Vorteil, dass ein erfindungsgemäßes Zugangsabsicherungssystems 11, 11' wie ein intelligenter Einzelsensor arbeiten kann, der seine Schaltinformationen einem übergeordneten sicheren Steuerungssystem zur Verfügung stellt.

### Bezugszeichenliste:

- 11, 11': Zugangsabsicherungssystem
- 13: Sicherheitssensor
- 15: Wandelement
- 17: Sicherheits-Schutzfeld
- 20, 21, 22: Detektions-Schutzfeld
- 25: elektronische Steuereinrichtung
- 27: Gesamt-Schutzfeld
- 29: Objekt
- 30: führerloses Transportfahrzeug
- 31: Plattform
- 33: Karosserie
- 35, 35': Baugruppe
- 40, 41: Detektions-Schutzfeld
- 50: Aussparung

- F: Förderrichtung

## Patentansprüche

1. Zugangsabsicherungssystem (11, 11')
mit einem ersten Sicherheitssensor (13), einem zweiten Sicherheitssensor (13) und einer elektronischen Steuereinrichtung (25), die mit dem ersten und dem zweiten Sicherheitssensor (13) in Signalverbindung steht,
wobei der erste und der zweite Sicherheitssensor (13) Laserscanner sind, die im Betrieb jeweils ein Sicherheits-Schutzfeld (17) und jeweils wenigstens ein erstes Detektions-Schutzfeld (20, 21, 22, 40, 41) ausbilden, wobei der erste und der zweite Sicherheitssensor (13) derart angeordnet sind, dass die ersten Detektions-Schutzfelder (20, 21, 22, 40, 41) wenigstens bereichsweise nicht überlappen, und wobei die elektronische Steuereinrichtung (25) dazu ausgebildet ist,
(i) beim Eindringen eines Objekts (29, 30, 31, 33, 35, 35') in das Sicherheits-Schutzfeld (17) des ersten und/oder des zweiten Sicherheitssensors (13) eine Sicherheitsfunktion auszulösen und
(ii) den Betriebszustand des Zugangsabsicherungssystems (11, 11') zu ändern, wenn ein Eindringen des Objekts (29, 30, 31, 33, 35, 35') sowohl in das erste Detektions-Schutzfeld (20, 21, 22, 40, 41) des ersten Sicherheitssensors (13) als auch in das erste Detektions-Schutzfeld (20, 21, 22, 40, 41) des zweiten Sicherheitssensors (13) festgestellt wird,
wobei das Ändern des Betriebszustands des Zugangsabsicherungssystems (11, 11') eine Anpassung des Sicherheits-Schutzfelds (17) des ersten und/oder des zweiten Sicherheitssensors (13) umfasst.

2. Zugangsabsicherungssystem nach Anspruch 1,
**dadurch gekennzeichnet, dass**
die elektronische Steuereinrichtung (25) dazu ausgebildet ist, die Sicherheits-Schutzfelder (17) und die Detektions-Schutzfelder (20, 21, 22, 40, 41) des ersten und des zweiten Sicherheitssensors (13) einer gemeinsamen Auswertung zu unterziehen.

3. Zugangsabsicherungssystem nach Anspruch 1 oder 2,
**dadurch gekennzeichnet, dass**
die elektronische Steuereinrichtung (25) dazu ausgebildet ist, das Ändern des Betriebszustands in Schritt (ii) in Abhängigkeit vom aktuellen Betriebszustand durchzuführen.

4. Zugangsabsicherungssystem nach zumindest einem der vorstehenden Ansprüche,
**dadurch gekennzeichnet, dass**
die elektronische Steuereinrichtung (25) eine Schaltlogik umfasst, die dazu ausgebildet ist, anhand einer logischen Verknüpfung von Ausgabesignalen aller Sicherheits-Schutzfelder (17) und aller Detektions-Schutzfelder (20, 21, 22, 40, 41) festzustellen, ob es sich bei einem in den abzusichernden Bereich eindringenden Objekt (29, 30, 31, 33, 35, 35') um ein zulässiges Objekt handelt.

5. Zugangsabsicherungssystem nach zumindest einem der vorstehenden Ansprüche,
**dadurch gekennzeichnet, dass**
die elektronische Steuereinrichtung (25) dazu ausgebildet ist, in dem geänderten Betriebszustand das Sicherheits-Schutzfeld (17) des ersten und/oder des zweiten Sicherheitssensors (13) an die Kontur eines vorgegebenen zulässigen Objekts (29, 30, 31, 33, 35, 35') anzupassen.

6. Zugangsabsicherungssystem nach zumindest einem der vorstehenden Ansprüche,
**dadurch gekennzeichnet, dass**
die elektronische Steuereinrichtung (25) dazu ausgebildet ist, in dem geänderten Betriebszustand durch fortlaufende Anpassung des Sicherheits-Schutzfelds (17) des ersten und/oder des zweiten Sicherheitssensors (13) eine Aussparung des durch die Sicherheits-Schutzfelder (17) gebildeten Gesamt-Schutzfelds (27) einem durch dieses hindurchbewegten Objekt (29, 30, 31, 33, 35, 35') nachzuführen.

7. Zugangsabsicherungssystem nach zumindest einem der vorstehenden Ansprüche,
**dadurch gekennzeichnet, dass**
die elektronische Steuereinrichtung (25) dazu ausgebildet ist, den Betriebszustand des Zugangsabsicherungssystems (11, 11') lediglich dann zu ändern, wenn das Eindringen des Objekts (29, 30, 31, 33, 35, 35') in das erste Detektions-Schutzfeld (20, 21, 22, 40, 41) des ersten Sicherheitssensors (13) und in das erste Detektions-Schutzfeld (20, 21, 22, 40, 41) des zweiten Sicherheitssensors (13) zusätzlich zu dem Eindringen des Objekts (29, 30, 31, 33, 35, 35') in das Sicherheits-Schutzfeld (17) des ersten und/oder des zweiten Sicherheitssensors (13) festgestellt wird.

8. Zugangsabsicherungssystem nach zumindest einem der vorstehenden Ansprüche,
**dadurch gekennzeichnet, dass**
die elektronische Steuereinrichtung (25) dazu ausgebildet ist, in dem geänderten Betriebszustand die Sicherheitsfunktion zu unterdrücken, insbesondere für eine vorgegebene Zeitdauer.

9. Zugangsabsicherungssystem nach zumindest einem der vorstehenden Ansprüche,
**dadurch gekennzeichnet, dass**
der erste und der zweite Sicherheitssensor (13) an gegenüberliegenden Seiten eines Überwachungsbereichs angeordnet sind.

10. Zugangsabsicherungssystem nach zumindest einem der vorstehenden Ansprüche,
**dadurch gekennzeichnet, dass**
der erste und der zweite Sicherheitssensor (13) Blickrichtungen definieren, die zumindest im Wesentlichen aufeinander zu weisen.

11. Zugangsabsicherungssystem nach zumindest einem der vorstehenden Ansprüche,
**dadurch gekennzeichnet, dass**
die Scan-Ebenen der Laserscanner (13) zumindest im Wesentlichen koplanar, parallel zueinander oder leicht schräg zueinander verlaufen.

12. Zugangsabsicherungssystem nach zumindest einem der vorstehenden Ansprüche,
**dadurch gekennzeichnet, dass**
die Sicherheits-Schutzfelder (17) des ersten und des zweiten Sicherheitssensors (13) aneinander angrenzen oder überlappen.

13. Zugangsabsicherungssystem nach zumindest einem der vorstehenden Ansprüche,
**dadurch gekennzeichnet, dass**
sich das erste Detektions-Schutzfeld (20, 21, 22, 40, 41) des ersten Sicherheitssensors (13) und/oder das erste Detektions-Schutzfeld (20, 21, 22, 40, 41) des zweiten Sicherheitssensors (13) jeweils in wenigstens einer Richtung über die Sicherheits-Schutzfelder (17) des ersten und des zweiten Sicherheitssensors (13) hinaus erstreckt.

14. Zugangsabsicherungssystem nach zumindest einem der vorstehenden Ansprüche,
**dadurch gekennzeichnet, dass**
der erste und der zweite Sicherheitssensor (13) im Betrieb jeweils wenigstens ein zweites Detektions-Schutzfeld (20, 21, 22, 40, 41) ausbilden, das sich in eine andere Richtung erstreckt als das erste Detektions-Schutzfeld (20, 21, 22, 40, 41).

## Claims

1. An access protection system (11, 11')
comprising a first safety sensor (13); a second safety sensor (13); and an electronic control device (25) which is in signal connection with the first and second safety sensors (13),
wherein the first and second safety sensors (13) are laser scanners which each form a safety protected field (17) and which each form at least one first detection protected field (20, 21, 22, 40, 41) in operation, with the first and second safety sensors (13) being arranged such that the first detection protected fields (20, 21, 22, 40, 41) do not overlap at least regionally, and with the electronic control device (25) being configured
(i) to trigger a safety function on a penetration of an object (29, 30, 31, 33, 35, 35') into the safety protected field (17) of the first and/or second safety sensors (13); and
(ii) to change the operating state of the access protection system (11, 11') when a penetration of the object (29, 30, 31, 33, 35, 35') both into the first detection protected field (20, 21, 22, 40, 41) of the first safety sensor (13) and into the first detection protected field (20, 21, 22, 40, 41) of the second safety sensor (13) is determined,
wherein the changing of the operating state of the access protection system (11, 11') comprises an adaptation of the safety protected field (17) of the first and/or second safety sensors (13).

2. An access protection system in accordance with claim 1,
**characterized in that**
the electronic control device (25) is configured to subject the safety protected fields (17) and the detection protected fields (20, 21, 22, 40, 41) of the first and second safety sensors (13) to a common evaluation.

3. An access protection system in accordance with claim 1 or claim 2,
**characterized in that**
the electronic control device (25) is configured to carry out the changing of the operating state in step (ii) in dependence on the current operating state.

4. An access protection system in accordance with at least one of the preceding claims,
**characterized in that**
the electronic control device (25) comprises a switching logic which is configured to determine whether an object (29, 30, 31, 33, 35, 35') penetrating into the zone to be protected is a permitted object with reference to a logical linking of output signals of all the safety protected fields (17) and of all the detection protected fields (20, 21, 22, 40, 41).

5. An access protection system in accordance with at least one of the preceding claims,
**characterized in that**
the electronic control device (25) is configured to adapt the safety protected field (17) of the first and/or second safety sensors (13) to the contour of a predefined permitted object (29, 30, 31, 33, 35, 35') in the changed operating state.

6. An access protection system in accordance with at least one of the preceding claims,
**characterized in that**
the electronic control device (25) is configured to cause a cut-out of the total protected field (27) formed by the safety protected fields (17) to track an object (29, 30, 31, 33, 35, 35') moved through it by a continuous adaptation of the safety protected field (17) of the first and/or second safety sensors (13) in the changed operating state.

7. An access protection system in accordance with at least one of the preceding claims,
**characterized in that**
the electronic control device (25) is configured to change the operating state of the access protection system (11, 11') only when the penetration of the object (29, 30, 31, 33, 35, 35') into the first detection protected field (20, 21, 22, 40, 41) of the first safety sensor (13) and into the first detection protected field (20, 21, 22, 40, 41) of the second safety sensor (13) is determined in addition to the penetration of the object (29, 30, 31, 33, 35, 35') into the safety protected field (17) of the first and/or second safety sensors (13).

8. An access protection system in accordance with at least one of the preceding claims,
**characterized in that**
the electronic control device (25) is configured to suppress the safety function, in particular for a predefined time period, in the changed operating state.

9. An access protection system in accordance with at least one of the preceding claims,
**characterized in that**
the first and second safety sensors (13) are arranged at oppositely disposed sides of a monitored zone.

10. An access protection system in accordance with at least one of the preceding claims,
**characterized in that**
the first and second safety sensors (13) define directions of view which at least substantially face one another.

11. An access protection system in accordance with at least one of the preceding claims,
**characterized in that**
the scan planes of the laser scanners (13) extend at least substantially in a coplanar manner, in parallel with one another, or slightly obliquely with respect to one another.

12. An access protection system in accordance with at least one of the preceding claims,
**characterized in that**
the safety protected fields (17) of the first and second safety sensors (13) are adjacent to one another or overlap.

13. An access protection system in accordance with at least one of the preceding claims,
**characterized in that**
the first detection protected field (20, 21, 22, 40, 41) of the first safety sensor (13) and/or the first detection protected field (20, 21, 22, 40, 41) of the second safety sensor (13) each extend in at least one direction beyond the safety protected fields (17) of the first and second safety sensors (13).

14. An access protection system in accordance with at least one of the preceding claims,
**characterized in that**
the first and second safety sensors (13) each form at least one second detection protected field (20, 21, 22, 40, 41) in operation which extends in a different direction than the first detection protected field (20, 21, 22, 40, 41).

## Revendications

1. Système de sécurisation d'accès (11, 11'),
comportant un premier capteur de sécurité (13), un second capteur de sécurité (13) et un moyen de commande électronique (25) qui est en communication de signaux avec les premier et second capteurs de sécurité (13), les premier et second capteurs de sécurité (13) étant des scanneurs laser qui, en fonctionnement, réalisent chacun un champ de protection de sécurité (17) et au moins un premier champ de protection de détection (20, 21, 22, 40, 41), les premier et second capteurs de sécurité (13) étant agencés de telle sorte que les premiers champs de protection de détection (20, 21, 22, 40, 41) ne se chevauchent au moins partiellement pas, et le moyen de commande électronique (25) étant réalisé pour
(i) déclencher une fonction de sécurité lors de la pénétration d'un objet (29, 30, 31, 33, 35, 35') dans le champ de protection de sécurité (17) du premier et/ou du second capteur de sécurité (13), et
(ii) modifier l'état de fonctionnement du système de sécurisation d'accès (11, 11') lorsqu'une pénétration de l'objet (29, 30, 31, 33, 35, 35') aussi bien dans le premier champ de protection de détection (20, 21, 22, 40, 41) du premier capteur de sécurité (13) que dans le premier champ de protection de détection (20, 21, 22, 40, 41) du second capteur de sécurité (13) est constatée,
la modification de l'état de fonctionnement du système de sécurisation d'accès (11, 11') incluant une adaptation du champ de protection de sécurité (17) du premier et/ou du second capteur de sécurité (13).

2. Système de sécurisation d'accès selon la revendication 1,
**caractérisé en ce que**
le moyen de commande électronique (25) est réalisé pour soumettre les champs de protection de sécurité (17) et les champs de protection de détection (20, 21, 22, 40, 41) du premier et du second capteur de sécurité (13) à une évaluation commune.

3. Système de sécurisation d'accès selon la revendication 1 ou 2,
**caractérisé en ce que**
le moyen de commande électronique (25) est réalisé pour mettre en oeuvre la modification de l'état de fonctionnement dans l'étape (ii) en fonction de l'état de fonctionnement actuel.

4. Système de sécurisation d'accès selon l'une au moins des revendications précédentes,
**caractérisé en ce que**
le moyen de commande électronique (25) comprend une logique de commutation qui est réalisée pour constater, en se basant sur une liaison logique de signaux d'émission de tous les champs de protection de sécurité (17) et de tous les champs de protection de détection (20, 21, 22, 40, 41), si un objet (29, 30, 31, 33, 35, 35') pénétrant dans la zone à sécuriser est un objet admissible.

5. Système de sécurisation d'accès selon l'une au moins des revendications précédentes,
**caractérisé en ce que**
le moyen de commande électronique (25) est réalisé pour adapter, dans l'état de fonctionnement modifié, le champ de protection de sécurité (17) du premier et/ou du second capteur de sécurité (13) au contour d'un objet admissible (29, 30, 31, 33, 35, 35') donné.

6. Système de sécurisation d'accès selon l'une au moins des revendications précédentes,
**caractérisé en ce que**
le moyen de commande électronique (25) est réalisé pour faire suivre, dans l'état de fonctionnement modifié, une échancrure du champ de protection total (27), formé par les champs de protection de sécurité (17), à un objet (29, 30, 31, 33, 35, 35') ayant traversé ledit champ total, par une adaptation continue du champ de protection de sécurité (17) du premier et/ou du second capteur de sécurité (13).

7. Système de sécurisation d'accès selon l'une au moins des revendications précédentes,
**caractérisé en ce que**
le moyen de commande électronique (25) est réalisé pour ne modifier l'état de fonctionnement du système de sécurisation d'accès (11, 11') que lorsque la pénétration de l'objet (29, 30, 31, 33, 35, 35') dans le premier champ de protection de détection (20, 21, 22, 40, 41) du premier capteur de sécurité (13) et dans le premier champ de protection de détection (20, 21, 22, 40, 41) du second capteur de sécurité (13) est constatée en supplément à la pénétration de l'objet (29, 30, 31, 33, 35, 35') dans le champ de protection de sécurité (17) du premier et/ou du second capteur de sécurité (13).

8. Système de sécurisation d'accès selon l'une au moins des revendications précédentes,
**caractérisé en ce que**
le moyen de commande électronique (25) est réalisé pour inhiber la fonction de sécurité, en particulier pendant une durée temporelle donnée, dans l'état de fonctionnement modifié.

9. Système de sécurisation d'accès selon l'une au moins des revendications précédentes,
**caractérisé en ce que**
les premier et second capteurs de sécurité (13) sont agencés sur des côtés opposés d'une zone à surveiller.

10. Système de sécurisation d'accès selon l'une au moins des revendications précédentes,
**caractérisé en ce que**
les premier et second capteurs de sécurité (13) définissent des directions d'observation qui sont dirigées au moins sensiblement l'une vers l'autre.

11. Système de sécurisation d'accès selon l'une au moins des revendications précédentes,
**caractérisé en ce que**
les plans de scannage des scanneurs laser (13) s'étendent au moins sensiblement de façon coplanaire, parallèle l'un à l'autre ou légèrement inclinée l'un par rapport à l'autre.

12. Système de sécurisation d'accès selon l'une au moins des revendications précédentes,
**caractérisé en ce que**
les champs de protection de sécurité (17) du premier et du second capteur de sécurité (13) sont adjacents l'un à l'autre ou se chevauchent.

13. Système de sécurisation d'accès selon l'une au moins des revendications précédentes,
**caractérisé en ce que**
le premier champ de protection de détection (20, 21, 22, 40, 41) du premier capteur de sécurité (13) et/ou le premier champ de protection de détection (20, 21, 22, 40, 41) du second capteur de sécurité (13) s'étend dans au moins une direction au-delà des champs de protection de sécurité (17) du premier et du second capteur de sécurité (13).

14. Système de sécurisation d'accès selon l'une au moins des revendications précédentes,
**caractérisé en ce que**
en fonctionnement, les premier et second capteurs de sécurité (13) réalisent chacun au moins un second champ de protection de détection (20, 21, 22, 40, 41) qui s'étend dans une direction autre que celle du premier champ de protection de détection (20, 21, 22, 40, 41).
